# EUROPÄISCHE PATENTANMELDUNG

(11) **EP 1 318 168 A1**
(43) Veröffentlichungstag der Anmeldung: **11.06.2003**
(21) Anmeldenummer: 01128413.0
(22) Anmeldetag: 04.12.2001
(51) Int. Cl.: C08K 5/3462, C08K 3/16, C08L 27/06, C08K 5/00, C08K 3/00

(54) **Stabilisatorkombinationen für chlorhaltige Polymere**

(71) Anmelder: Crompton Vinyl Additives GmbH, 68623 Lampertheim (DE)
(72) Erfinder: Kuhn, Karl-Josef, Dr., 64686 Lautertal-Gadernheim (DE); Wehner, Wolfgang, Dr., 64673 Zwingenberg (DE); Friedrich, Hans-Helmut, 64686 Lautertal-Gadernheim (DE); Hopfmann, Thomas, Dr., 64653 Lorsch (DE)
(74) Vertreter: Wibbelmann, Jobst, Dr., Dipl.-Chem.

(57) **Zusammenfassung**

Es wird eine Stabilisatorkombination für chlorhaltige Polymere, insbesondere PVC, beschrieben, enthaltend
A) mindestens eine Verbindung der Formel (I) 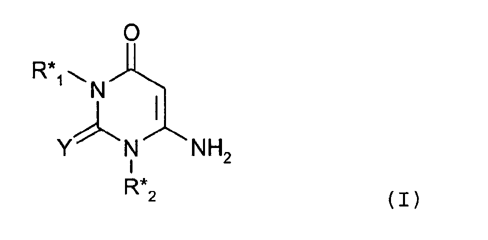 worin R*1 und R*₂ unabhängig voneinander Wasserstoff, C₁₄-C₂₄-Alkyl oder C₁₄-C₂₄-Alkenyl, verzweigt oder unverzweigt, darstellen, sowie
   Y gleich S oder O ist, und
B) mindestens eine Perchlorat-Verbindung,
sowie weitere typische Zusatzstoffe oder Stabilisatorverbindungen.

## Beschreibung

Die Erfindung betrifft Stabilisatorkombinationen aus mindestens einer Aminouracil-Verbindung der unten dargestellten Formel (I) und mindestens einer Verbindung aus der Gruppe der Perchlorat-Verbindungen, die sich zum Stabilisieren von chlorhaltigen Polymeren, insbesondere PVC, eignen.

PVC kann durch eine Reihe von Zusatzstoffen stabilisiert werden. Verbindungen des Bleis, Bariums und Cadmiums sind dafür besonders gut geeignet, sind jedoch heute aus ökologischen Gründen oder wegen ihres Schwermetallgehalts umstritten (vgl. "Kunstoffadditive", R.Gächter/ H.Müller, Carl Hanser Verlag, 3. und 4. Aufl., 1989 und 2001, S. 303-311; "Kunststoff Handbuch PVC", Band 2/1, W.Becker/D.Braun, Carl Hanser Verlag, 2. Aufl., 1985, S. 531-538; sowie Kirk-Othmer: "Encyclopedia of Chemical Technology", 4^{th} Ed., 1994, Vol. 12, Heat Stabilizers, S. 1071-1091). Man sucht daher weiter nach wirksamen Stabilisatoren und Stabilisatorkombinationen, welche frei von Blei, Barium und Cadmium sind.

Es wurde nun gefunden, dass man A) mindestens eine Aminouracil-Verbindung der Formel (I) 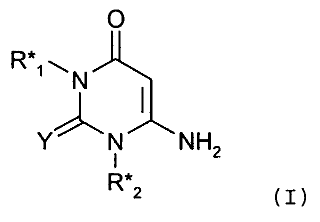 worin R*₁ und R*₂ unabhängig voneinander Wasserstoff, C₁₄-C₂₄-Alkyl oder C₁₄-C₂₄-Alkenyl, verzweigt oder unverzweigt, darstellen können, und Y gleich S oder O ist, mit B) mindestens einer Perchlorat-Verbindung kombinieren kann, um damit chlorhaltige Polymere, insbesondere PVC, zu stabilisieren.

Die unter A) genannten Aminouracil-Verbindungen der Formel (I) werden wie folgt erläutert:
Beispiele für die Alkylreste in der Formel (I) sind Tetradecyl, Hexadecyl, Octadecyl, Eicosyl, Docosyl, Tetracosyl. Beispiele für die Alkenylreste sind Tetradecenyl, Hexadecenyl, Octadecenyl und Eicosenyl. Die Alkyl- oder Alkenylreste können verzweigt oder unverzweigt vorliegen.
Bevorzugt sind Tetradecyl (Myristyl), Hexadecyl (Palmityl), Octadecyl (Stearyl) und Octadecenyl (Oleyl).
Beispiele für Aminouracile der Formel (I) sind:
6-Aminouracil, 6-Aminothiouracil, 6-Amino-1-tetradecyluracil, 6-Amino-1-hexadecylthiouracil, 6-Amino-1-octadecylthiouracil, 6-Amino-1-oleyluracil, 6-Amino-1,3-ditetradecyluracil, 6-Amino-1,3-dihexadecyluracil, 6-Amino-1,3-distearyluracil, 6-Amino-1,3-dioleyluracil.
Bevorzugt sind 6-Amino-1,3-dimyristyluracil, 6-Amino-1,3 dipalmityluracil, 6-Amino-1,3-distearyluracil und 6-Amino-1,3-dioleyluracil.
Besonders bevorzugt sind 6-Amino-1,3-distearyluracil und 6-Amino-1,3-dioleyluracil.

Die Verbindungen der Komponente A) sind zur Erzielung der Stabilisierung im chlorhaltigen Polymer zweckmäßig zu 0,01 bis 10, vorzugsweise zu 0,05 bis 5,0, insbesondere zu 0,1 bis 3 Gew.-Teilen, bezogen auf 100 Gew.-Teile PVC, zu verwenden.

Die unter B) genannten Perchlorat-Verbindungen werden wie folgt erläutert:

### Perchlorat-Verbindungen

Beispiele sind diejenigen der Formel M(ClO₄)ₙ, wobei M für Li, Na, K, Mg, Ca, Sr, Ba, Zn, Al, La, Ce oder ein Hydrotalcitschichtgitterkation steht. Der Index n ist entsprechend der Wertigkeit von M 1, 2, 3 oder 0 < n ≦ 1 beim Schichtgitterkation des Hydrotalcits.
Die Perchloratsalze können mit Alkoholen (Polyolen, Cyclodextrinen), oder Ätheralkoholen bzw. Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglycole, sowie Di-, Tri- und Tetrapentaerythrit oder Polyvinylalkohol in verschiedenen Polymerisationsgraden. Die Perchloratsalze können dabei in verschiedenen gängigen Darreichungsformen eingesetzt werden; z.B. als Salz oder wässrige Lösung aufgezogen auf ein Trägermaterial wie PVC, Ca-Silikat, Zeolithe oder Hydrotalcite, oder eingebunden durch chemische Reaktion in einen Hydrotalcit. Als Polyolpartialether sind Glycerinmonoether und Glycerinmonothioether bevorzugt. Weitere Ausführungsformen werden beschrieben in EP 0 394 547, EP 0 457 471 und WO 94/24200.

Die Perchlorat-Verbindungen der Komponente B) können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

Weiterhin können ein oder mehrere Zusatzstoffe und/oder weitere mögliche typische Stabilisatorverbindungen sowie Kombinationen davon in der erfindungsgemäßen Stabilisatorkombination mitverwendet werden. Einzelheiten dazu sind in der EP 0 768 336 ausführlich beschrieben, die hier ausdrücklich zugrunde gelegt wird. Zu den typischen Zusatzstoffen gehören beispielsweise Zink-, Erdalkaliund/oder Alkalihydroxide oder -oxide, Aluminiumcarboxylate, sowie Zeolithe, Hydrotalcite, Glycidylverbindungen, Polyole, Disaccharidalkohole, Metallseifen (z.B. auch Calciumacetylacetonat), Phosphite, Weichmacher, Gleitmittel, Füllstoffe oder Pigmente.

In der WO 00/68207 werden mit langkettigen Alkylresten substituierte 6-Amino-uracile und deren Verwendung zur Stabilisierung von halogenhaltigen Polymeren offenbart. Die alleinige Verwendung von Verbindungen der Formel (I) als Stabilisatoren für chlorhaltige Polymere ist bereits in der WO 00/68207 beschrieben.
Die erfindungsgemäße Kombination dieser Verbindungen mit den Perchloraten führt allerdings zu einer unerwarteten synergistisch verbesserten Stabilisierung der Polymere.

Die Stabilisatorkombination kann nicht nur durch Mischen der Komponenten in dafür geeigneten Apparaturen hergestellt werden, sondern auch, indem ein Teil der zusätzlichen Stoffe vor Zugabe der Komponente A) *in situ* in einer Schmelze von Gleitmitteln und/oder Metallseifen hergestellt werden. Diese Methode eignet sich insbesondere zur *in situ*-Herstellung von Calciumacetylacetonat (vgl. EP 336 289).

Beispiele für die zu stabilisierenden chlorhaltigen Polymere oder deren Recyclate sind: Polymere des Vinylchlorides, Vinylharze, enthaltend Vinylchlorideinheiten in ihrer Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Polymere des Ethylens; Polymere und nachchlorierte Polymere von Chlorbutadiens und deren Copolymere mit Vinylchlorid; sowie Mischungen der genannten Polymere unter sich oder mit anderen polymerisierbaren Verbindungen.
Ferner sind umfaßt die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylacetonen.

Weiterhin bevorzugt sind Suspensions- und Massepolymere, sowie Emulsionspolymere.

Als chlorhaltiges Polymerisat ist Polyvinylchlorid besonders bevorzugt, insbesondere das Suspensionspolymerisat und Massepolymerisat.
Im Rahmen dieser Erfindung sind unter PVC auch Copolymerisate oder Pfropfpolymerisate von PVC mit polymerisierbaren Verbindungen wie Acrylnitril, Methylacryat, Vinylacetat oder ABS zu verstehen, wobei es sich um Suspensions-, Masse- oder Emulsionspolymerisate handeln kann. Bevorzugt ist PVC Homopolymer - in Kombination mit Polyacrylaten.
Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente oder Klebstoffe, die oft schwierig zu entfernen sind. Diese Fremdstoffe können auch aus dem Kontakt mit diversen Stoffen während des Gebrauchs oder der Aufarbeitung stammen, wie z.B. Treibstoffreste, Lackanteile, Metallspuren und Initiatorreste.

Die Erfindung betrifft auch ein Verfahren zur Stabilisierung chlorhaltiger Polymere, dadurch gekennzeichnet, dass man diesen eine Stabilisatorkombination gemäß Anspruch 1 zufügt und die Komponenten in dafür geeigneten Apparaturen innig vermischt.

Zweckmäßig kann die Einarbeitung der Stabilisatoren nach folgenden Methoden erfolgen:
als Emulsion oder Dispersion (eine Möglichkeit ist z.B. in Form einer pastösen Mischung; ein Vorteil der erfindungsgemäßen Kombination besteht bei dieser Darreichungsform in der Stabilität der Paste.);
als Trockenmischung während des Vermischens von Zusatzkomponenten oder Polymermischungen;
durch direktes Zugeben in die Verarbeitungsapparatur (z.B. Kalander, Mischer, Kneter, Extruder und dergleichen); oder als Lösung oder Schmelze.

Das erfindungsgemäß stabilisierte PVC, das die Erfindung ebenfalls betrifft, kann auf an sich bekannte Weise hergestellt werden, wozu man unter Verwendung an sich bekannter Vorrichtungen wie den oben genannten Verarbeitungsapparaturen die erfindungsgemäße Stabilisatorkombination und gegebenenfalls weitere Zusatzstoffe und/oder Stabilisatoren mit dem PVC vermischt. Hierbei können die Stabilisatorkomponenten einzeln oder in Mischung zugegeben werden, oder auch in Form sogenannter Masterbatches.

Die Erfindung betrifft somit auch ein Verfahren zur Herstellung von stabilisiertem PVC, dadurch gekennzeichnet, dass man unter Verwendung von Vorrichtungen, wie Kalandern, Mischern, Knetern, Extrudern und dergleichen, die vorstehend beschriebenen Stabilisatorkomponenten und gegebenenfalls weitere Zusätze wie beispielsweise, aber nicht einschränkend, in der EP 0 768 336 beschrieben, mit dem PVC vermischt.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen, Sintern oder Spinnen, ferner Extrusions-Blasen oder eine Verarbeitung nach dem
Plastisol-Verfahren. Das stabilisierte PVC kann auch zu Schaumstoffen verarbeitet werden. Setzt man als Treibmittel Azodicarbonamid ein, ist es vorteilhaft, wenn keine 1,3-Diketone zusätzlich verwendet werden.

Das erfindungsgemäß stabilisierte PVC eignet sich z.B. für Halbhart- und Weich-Rezepturen, insbesondere in Form von Weichrezepturen für Drahtummantelungen, Crash pad-Folien (Automobile), Kabelisolierungen, welche besonders bevorzugt sind. In Form von Halbhart-Rezepturen eignet sich das erfindungsgemäße PVC besonders für Dekorationsfolien, Schaumstoffe, Agrarfolien, Schläuche, Dichtungsprofile und Bürofolien.
In Form von Hart-Rezepturen eignet sich das erfindungsgemäß stabilisierte PVC besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).
Beispiele für die Anwendung des erfindungsgemäßen PVC als Plastisol sind Kunstleder, Bodenbeläge, Textilbeschichtungen, Tapeten, Coil-Coatings und Unterbodenschutz für Kraftfahrzeuge.
Beispiele für Sinter-PVC-Anwendungen des erfindungsgemäß stabilisierten PVC sind Slush, Slush Mould und Coil-Coatings.
Bevorzugt sind PVC-Hartschaumstoff-Formkörper und PVC-Rohre wie für Trink- oder Abwasser, Druckrohre, Gasrohre, Kabelkanal- und Kabelschutzrohre, Rohre für Industrieleitungen, Sickerrohre, Abflußrohre, Dachrinnenrohre und Drainagerohre. Näheres hierzu siehe "Kunststoffhandbuch PVC", Band 2/2, W.Becker/H.Braun, 2.Aufl., 1985, Carl Hanser Verlag, S. 1236-1277.

Das folgende Beispiel erläutert die Erfindung weiter, ohne sie jedoch zu beschränken. Teile- und Prozentangaben beziehen sich - wie auch in der übrigen Beschreibung - sofern nicht anders angegeben, auf das Gewicht.

### Beispiel 1: Statischer Hitzetest

Eine Mischung bestehend aus

| | |
|---|---|
| 100,0 Teile | Evipol SH 5730 = PVC K-Wert 57 |
| 0,5 Teile | Paraloid K 120 N = Acrylat Verarbeitungshilfe |
| 0,5 Teile | Paraloid K 175 = Acrylat Verarbeitungshilfe |
| 1,0 Teile | Loxiol® G 16 = Fettsäurepartialester des Glycerins (ex Henkel) |
| 0,3 Teile | Wachs E = Esterwachs (Montan Wachs) (ex BASF) |
| 5,0 Teile | BTA III N 2 = MBS- (Methylmethacrylat-Butadien-Styrol) |

| Zusatzstoffe | |
|---|---|
| 3,0 Teile | ESO = epoxidiertes Sojabohnenöl |
| 0,1 Teile | Magnesiumlaurat |

und jeweils (x) Teile Stabilisator 1 und (y) Teile Stabilisator 2, wie in den Tabellen 1 und 2 angegeben, wurde auf einem Mischwalzwerk 5 Minuten bei 180°C gewalzt. Vom gebildeten Walzfell wurde (a) ein statischer Hitzetest durchgeführt und die Verfärbung durch den Yellowness Index (YI) nach ASTM D-1925-70 bestimmt (Walzfell 180°C; 5 min; 0,3 mm; Hitzetest bei 190°C, Taktzeit 3 min; Taktweg 15 mm) und (b) ein Dehydrochlorierungstest (DHC) nach DIN 53381 bei 180°C durchgeführt. Die Ergebnisse sind den Tabellen 1 und 2 zu entnehmen.

Der Stabilisator 1 entspricht der Komponente A) = 1,3-Di-noctadecyl-aminouracil.

Der Stabilisator 2 entspricht der Komponente B) = 30%ige Lösung von Natriumperchlorat-Monohydrat in Butyldiglycol.

**Tabelle 1**

| Statischer Hitzetest (in YI-Werten) (a) | | | | | |
|---|---|---|---|---|---|
| **Bsp.** | **I** | **II** | **III** | **IV** | **V** |
| Minuten | 0,5 Tle **Stab. 1** | 0,47 Tle **Stab. 1** 0,03 Tle Stab. 2 | 1,0 Tle **Stab. 1** | 0,97 Tle **Stab. 1** 0,03 Tle **Stab. 2** | 0,03 Tle **Stab. 2** |
| 3 | 25,39 | 25,20 | 16,07 | 16,47 | 74,64 |
| 6 | 40,02 | 37,70 | 22,01 | 20,96 | |
| 9 | 64,88 | 57,11 | 33,24 | 29,75 | |
| 12 | 92,67 | 86,85 | 48,23 | 40,23 | |
| 15 | Abbruch | 114,13 | 72,11 | 55,52 | |
| 18 | | | 101,28 | 74,41 | |
| 21 | | | | 91,05 | |
| 24 | | | | 113,86 | |

**Tabelle 2**

| Dehydrochlorierungstest bei 180°C (in Minuten) (b) | | | | | |
|---|---|---|---|---|---|
| **Bsp.** | **I** | **II** | **III** | **IV** | **V** |
| | 0,5 Tle **Stab. 1** | 0,47 Tle **Stab. 1** 0,03 Tle **Stab. 2** | 1,0 Tle **Stab. 1** | 0,97 Tle **Stab. 1** 0,03 Tle **Stab. 2** | 0,03 Tle **Stab. 2** |
| 10 [µS/cm] | 62 | 80 | 64 | 108 | 48 |
| 200 [µS/cm] | 69 | 124 | 69 | 118 | 98 |

Ohne Verlust der Anfangsfarbe wird in den beiden Erfindungsbeispielen II und IV die Verbesserung der Langzeitstabilität gezeigt (Tab. 1). Dies geht auch aus der Verlängerung der Abbruchzeit (Tab. 2) hervor.

Es zeigt sich somit eine synergistische Wirkung bei der Verwendung einer Kombination der beiden Sabilisatorkomponenten A) und B) gegenüber der Verwendung der einzelnen Stabilisatoren.

## Patentansprüche

1. Stabilisatorkombination enthaltend
A) mindestens eine Verbindung der Formel (I) 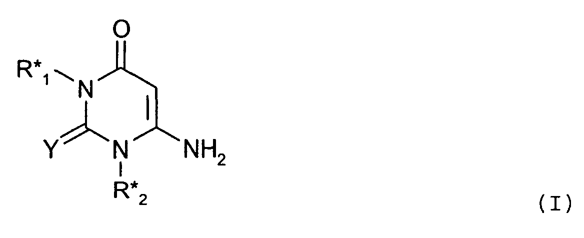 worin R*₁ und R*₂ unabhängig voneinander Wasserstoff, C₁₄-C₂₄-Alkyl oder C₁₄-C₂₄-Alkenyl, verzweigt oder unverzweigt, darstellen, sowie Y gleich S oder O ist, und
B) mindestens eine Perchlorat-Verbindung.

2. Stabilisatorkombination gemäß Anspruch 1, worin die Verbindung der Komponente A) 6-Amino-1,3-dimyristyluracil, 6-Amino-1,3-dipalmityluracil, 6-Amino-1,3-distearyluracil oder 6-Amino-1,3-dioleyluracil ist.

3. Stabilisatorkombination gemäß Anspruch 1 oder 2, wobei Perchlorat-Verbindung der Komponente B) eine Verbindung der Formel M(ClO₄)ₙ ist, wobei M für Li, Na, K, Mg, Ca, Sr, Ba, Zn, Al, La, Ce oder ein Hydrotalcitschichtgitterkation steht; n ist entsprechend der Wertigkeit von M 1, 2 oder 3 oder bei Vorliegen eines Hydrotalcitschichtgitterkations 0 < n ≦ 1.

4. Stabilisatorkombination gemäß einem der Ansprüche 1 bis 3, die zusätzlich Zink- und/oder Alkali- und/oder Erdalkalihydroxide oder -oxide oder Aluminiumcarboxylate enthält.

5. Stabilisatorkombination gemäß einem der Ansprüche 1 bis 4, die zusätzlich mindestens einen weiteren Stoff aus den Gruppen der Zeolithe, Hydrotalcite, Glycidylverbindungen, Polyole, Disaccharidalkohole, Metallseifen, Phosphite, Weichmacher, Gleitmittel, Füllstoffe oder Pigmente enthält.

6. Stabilisatorkombination gemäß Anspruch 1, enthaltend die Stabilisatorkomponenten A) und B) sowie weitere Stabilisatoren.

7. Zusammensetzung, enthaltend ein chlorhaltiges Polymer und eine Stabilisatorkombination nach einem der Ansprüche 1 bis 6.

8. Zusammensetzung nach Anspruch 7, **dadurch gekennzeichnet, dass** bezogen auf 100 Gew.-Teile chlorhaltiges Polymer, 0,01-10, bevorzugt 0,1-3 Gew.-Teile der Stabilisatorkomponente A) und 0,001-5, bevorzugt 0,01-2 Gew.-Teile der Stabilisatorkomponente B) enthalten sind.

9. Verfahren zur Stabilisierung von chlorhaltigen Polymeren durch Zusatz einer Stabilisatorkombination nach einem der Ansprüche 1 bis 6 zu einem chlorhaltigen Polymer.

10. Verfahren zur Stabilisierung von chlorhaltigen Polymeren gemäß Anspruch 9, **dadurch gekennzeichnet, dass** das chlorhaltige Polymer PVC darstellt.
